(19) Europäisches Patentamt
European Patent Office
Office européen des brevets

(11) Veröffentlichungsnummer: **0 126 025**
**B1**

(12) # EUROPÄISCHE PATENTSCHRIFT

(45) Veröffentlichungstag der Patentschrift: **07.10.87**

(51) Int. Cl.⁴: **D 06 P 3/10**, D 06 P 3/87

(21) Anmeldenummer: **84810184.6**

(22) Anmeldetag: **13.04.84**

(54) **Verfahren zum Färben von Seide oder seidenhaltigen gemischten Fasermaterialien.**

(30) Priorität: **20.04.83 CH 2124/83**

(43) Veröffentlichungstag der Anmeldung:
**21.11.84 Patentblatt 84/47**

(45) Bekanntmachung des Hinweises auf die Patenterteilung:
**07.10.87 Patentblatt 87/41**

(84) Benannte Vertragsstaaten:
**CH DE FR GB IT LI**

(56) Entgegenhaltungen:
**EP - A - 0 043 331**
**CH - B - 423 708**
**DE - A - 2 341 870**
**FR - A - 1 217 081**
**US - A - 2 950 165**

**FACHORGAN FÜR TEXTILVEREDLUNG, Band 16, Nr. 7, Juli 1961, Seiten 455-456, Weinfelden, CH; H.U. VON DER ELTZ et al.: "Die Bedeutung der Remazol-Farbstoffe für das Färben von Zellulose- und Polyamidfasern, Acrilan, Wolle und Naturseide"**
**CHEMICAL ABSTRACTS, Band 92, Nr. 10, März 1980, Seite 75, Nr. 77966b, Columbus, Ohio, USA; H. KATO et al.: "Fixation of reactive dyes on tusser silk fabric"**
***Journal of the Society of Dyers and Colourists*, vol. 99, pages 56-59 (1983)**
**Journal of the Society of Dyers and Colourists, vol. 98, pages 394-397 (1982)**

(73) Patentinhaber: **CIBA-GEIGY AG, Klybeckstrasse 141, CH-4002 Basel (CH)**

(72) Erfinder: **Rohrer, Rudolf, Steingrubenweg 75, CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 126 025 B1

ACTORUM AG

## Beschreibung

Die vorliegende Erfindung liegt auf dem technischen Gebiet der Anwendung von Reaktivfarbstoffen zum Färben oder Bedrucken von Seide oder seidenhaltigen gemischten Fasermaterialien.

Textilien aus Naturseide oder Mischungen von Naturseide und Wolle können – je nach den gestellten Anforderungen – mit Produkten verschiedener Farbstoffklassen gefärbt werden. Vorwiegend werden in der Praxis Säure- und Metallkomplex-Farbstoffe, die auch für die Wollfärbung in Betracht kommen, eingesetzt. Die in neuerer Zeit erhöhten Anforderungen an den Standard der Nassechtheiten haben auch zum Einsatz von Reaktivfarbstoffen geführt. Die bisher in der Literatur vorgeschlagenen Färbemethoden geben jedoch häufig unbefriedigende Resultate; so werden bei empfohlenen Färbeverfahren zum Teil nur geringe Fixiergrade erreicht.

Der vorliegenden Erfindung lag die Aufgabe zugrunde, ein neues, verbessertes Verfahren zum Färben oder Bedrucken von Seide oder seidenhaltigen gemischten Fasermaterialien mit Reaktivfarbstoffen zu finden, das zu echten Färbungen und Drucken führt.

Mit der vorliegenden Erfindung wird ein neues Verfahren vorgestellt, das die gestellten Anforderungen erfüllt.

Das Verfahren ist dadurch gekennzeichnet, dass man Reaktivfarbstoffe der Formel

$$D-[Y]_n \qquad (1),$$

worin D der Rest eines sulfogruppenhaltigen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe ist, und $[Y]_n$ für n = 1 bis 4 gleiche oder verschiedene Reaktivreste Y steht, wobei Y 2,4-Difluor-5-chlor-pyrimidinyl oder 4-Fluor-s-triazin-6-yl, welches in 2-Stellung substituiert ist durch Aryl, Alkyl, eine über ein Schwefelatom gebundene aliphatische oder aromatische Mercaptoverbindung, eine über ein Sauerstoffatom gebundene aliphatische oder aromatische Hydroxylverbindung, $-NH_2$ oder eine über das Stickstoffatom gebundene aliphatische, heterocyclische oder aromatische Aminoverbindung; bedeutet, in wässrigem Medium bei einer Färbetemperatur von 50 bis 130°C einsetzt, und bei einem pH von 8 bis 11 fixiert.

In dem erfindungsgemässen Verfahren werden bevorzugt verwendet:

a) Reaktivfarbstoffe der Formel (1), worin D der Rest eines Mono- oder Disazofarbstoffes ist;

b) Reaktivfarbstoffe der Formel (1), worin D der Rest eines Schwermetall-Azofarbstoff-Komplexes ist;

c) Reaktivfarbstoffe der Formel (1), worin D der Rest eines Anthrachinonfarbstoffes ist;

d) Reaktivfarbstoffe der Formel (1), worin D der Rest eines Kupfer- oder Nickelphthalocyanins, Kupfer-Formazan-Komplexes oder Triphendioxazins ist;

e) Reaktivfarbstoffe der Formel (1), worin D der Rest eines 1:2-Chrom- oder 1:2-Kobaltkomplexazofarbstoffes der Benzol- oder Naphthalinreihe ist, und das Chrom- bzw. Kobaltatom an jeweils eine metallisierbare Gruppe in ortho-Position zur Azobindung gebunden ist;

f) Reaktivfarbstoffe der Formel

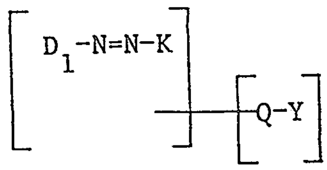

(2)

worin $D_1$ der Rest einer Diazokomponente der Benzol- oder Naphthalinreihe, K der Rest einer Kupplungskomponente der Benzol- oder Naphthalinreihe oder der heterocyclischen Reihe, Q ein Brückenglied –N(R)–, und R Wasserstoff oder gegebenenfalls substituiertes $C_{1-4}$-Alkyl ist, Y die unter Formel (1) geltende Bedeutung hat, und der Reaktivrest Y über Q an die Diazokomponente oder an die Kupplungskomponente gebunden ist, oder je ein oder zwei Reaktivrest(e) sowohl an die Diazokomponente als auch an die Kupplungskomponente gebunden ist (sind), oder zwei Reaktivreste an die Kupplungskomponente oder an die Diazokomponente oder zwei Reaktivreste an die Diazokomponente oder an die Kupplungskomponente und ein Reaktivrest und die Kupplungskomponente oder an die Diazokomponente gebunden sind, und n die unter Formel (1) angegebene Bedeutung hat.

g) Reaktivfarbstoffe der Formel (2), worin R Wasserstoff oder Methyl ist;

h) Reaktivfarbstoffe der Formeln (1) oder (2), worin n = 1, 2 oder 3, insbesondere 1 oder 2 ist.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo. Diejenigen Reaktivfarbstoffe, worin D der Rest eines Azofarbstoffes ist, enthalten als Substituenten insbesondere Methyl, Äthyl, Methoxy, Äthoxy, Benzoylamino, Amino, Acetylamino, Ureido, Sulfomethyl, Hydroxy, Carboxy, Halogen oder Sulfo.

Falls R in Formel (2) ein $C_{1-4}$-Alkylrest ist, kann

dieser weitersubstituiert sein, z.B. durch Halogen, Hydroxy, Cyan, Alkoxy, Carboxy oder Sulfo. Als Beispiele für R seien die folgenden Substituenten genannt:

Methyl, Äthyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Äthoxycarbonylmethyl, β-Methoxyäthyl, β-Äthoxyäthyl, β-Methoxypropyl, β-Chloräthyl, γ-Clorpropyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl.

Die Farbstoffe der Formel (1) enthalten mindestens einen faserreaktiven Rest Y. Unter faserreaktiven Verbindungen sind solche zu verstehen, die mit den Hydroxygruppen der Cellulose oder mit den Amino-, Hydroxy- oder Thiolgruppen von natürlichen oder synthetischen Polyamiden unter Bildung kovalenter chemischer Bindungen zu reagieren vermögen.

Bevorzugt verwendet werden Reaktivfarbstoffe der Formel (1) bzw. (2), worin Y 2,4-Difluor-5-chlorpyrimidyl-(6) oder ein Amino-fluor-s-triazinylrest ist, dessen Aminogruppe gegebenenfalls substituiert sein kann.

Erfindungsgemäss einsetzbare Reaktivfarbstoffe der Formel (1) sind z.B. aus dem Colour Index, Vol. 3 (1971), Seiten 3391 bis 3560 bekannt. Sie können hergestellt werden, indem man in einen Farbstoff mit dem Rest D oder in ein Farbstoffvorprodukt, in an sich bekannter Weise die Reaktivreste Y einführt und dass man im Falle der Verwendung von Farbstoffvorprodukten, diese in die gewünschten Endfarbstoffe umwandelt.

Vorzugsweise führt man in Farbstoffe, die eine oder zwei freie Aminogruppen enthalten, Reaktivreste durch Acylierung mit faserreaktiven Acylierungsmitteln ein.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffes ist.

Beispiel für derartige, aus zwei oder mehr als zwei Komponenten zusammengesetzte Farbstoffe sind: Monoazo-, Disazo-, Metallkomplexazo-, Formazan- und Azomethinfarbstoffe.

Handelt es sich z.B. um einen Azofarbstoff, kann man eine Diazokomponente, die ausser der zu diazotierenden Aminogruppe eine Gruppe -N(R)H enthält, oder eine Kupplungskomponente, die eine Gruppe -N(R)H enthält mit einem faserreaktiven Acylhalogenid umsetzen, und das so erhaltene Produkt anschliessend durch Kupplung mit der anderen Komponente in den gewünschten Azofarbstoff überführen, und gegebenenfalls eine weitere Umwandlungsreaktion anschliessen.

Nach dieser Verfahrensvariante können Reaktivfarbstoffe der Formel (1), die zwei Reaktivreste enthalten, hergestellt werden, in dem man eine Diazokomponente und eine Kupplungskomponente verwendet, die je eine Gruppe -N(R)H enthalten, und vor oder nach der Kupplung acyliert.

Farbstoffe der Formel (1), die zwei Reaktivreste enthalten, sind auch in der Weise herstellbar, dass man Farbstoffe verwendet, die im Rest D bereits einen Reaktivrest enthalten, oder die zwei Gruppen -N(R)H enthalten, und diese zusammen acyliert. Liegen in den hergestellten Reaktivfarbstoffen zur Metallkomplexbildung befähigte Gruppen vor, können die Reaktivfarbstoffe auch nachträglich metallisiert werden. Vorzugsweise erfolgt die Einführung der Reaktivgruppe nach der Metallisierung.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste enthalten, ausgeht, oder diese faserreaktive Reste in hierfür geeignete Zwischenprodukte mit Farbstoffcharakter einführt.

Die Acylierung der Aminofarbstoffe oder der Farbstoffvorprodukte mit den Acylhalogeniden erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Farbstoffe der Formel (1), die drei oder vier Reaktivreste enthalten, sind in der Weise herstellbar, dass man Farbstoffe verwendet, die im Rest D drei oder vier in faserreaktive Gruppen überführbare Reste enthalten, oder die zwei in faserreaktive Gruppen überführbare Reste enthalten, wobei solche faserreaktiven Ausgangsverbindungen verwendet werden können, die an einen Reaktivrest einen zweiten Reaktivrest gebunden enthalten, wie z.B. den 2-(β-Sulfatoäthylsulfonyläthylamino)-4-fluor-triazinylrest.

Im folgenden sollen mögliche Ausgangsstoffe, die zur Herstellung der Reaktivfarbstoffe der Formel (1) verwendet werden können, einzeln genannt werden.

Als Aminofarbstoffe kommen besonders Farbstoffe der folgenden Strukturtypen in Betracht:

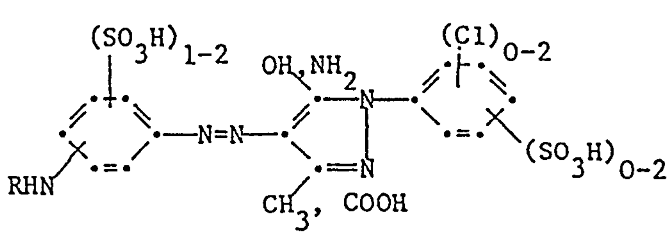

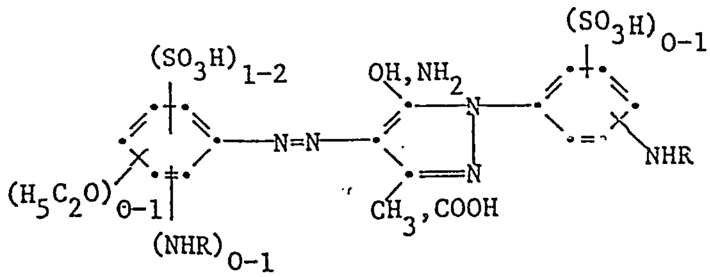

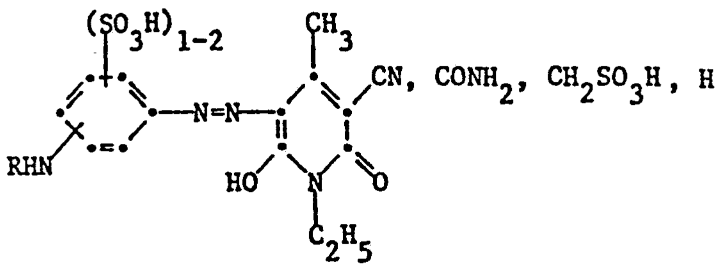

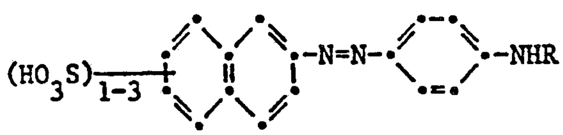

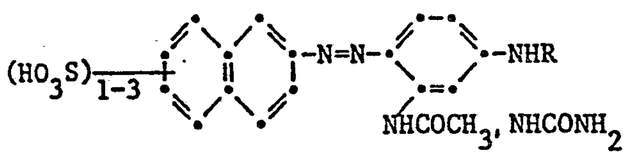

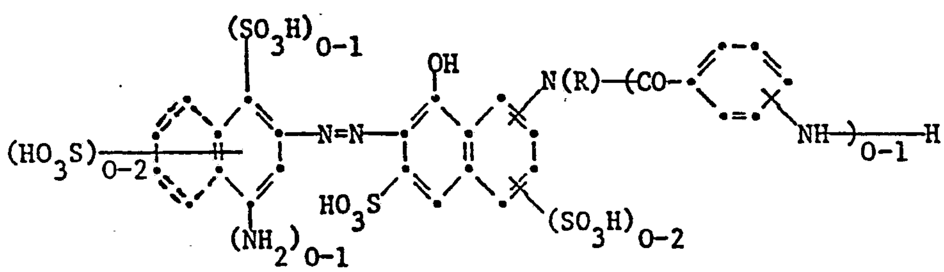

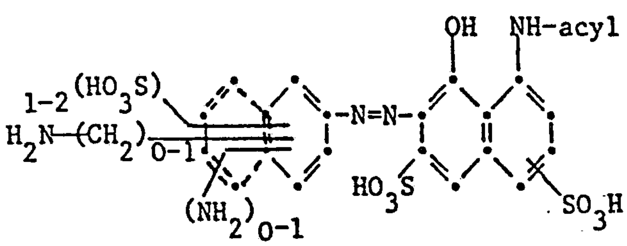

worin Acyl z.B. Acetyl oder gegebenenfalls substituiertes Benzoyl ist.

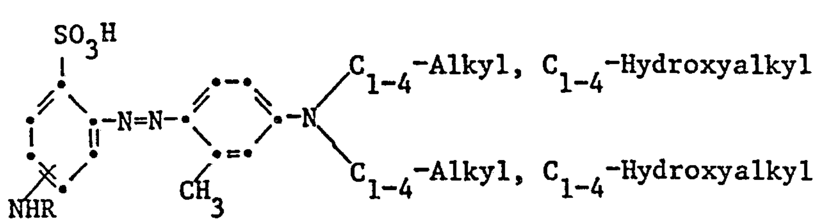

Metallkomplexe von Farbstoffen der Formeln:

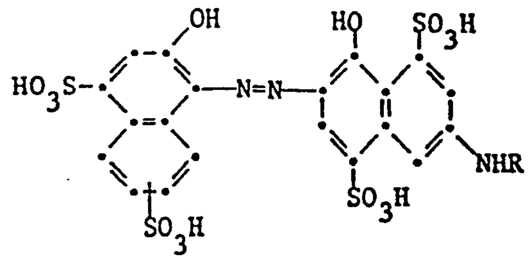

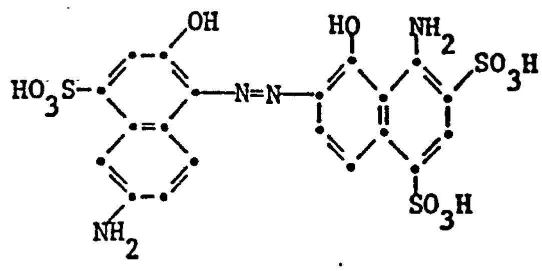

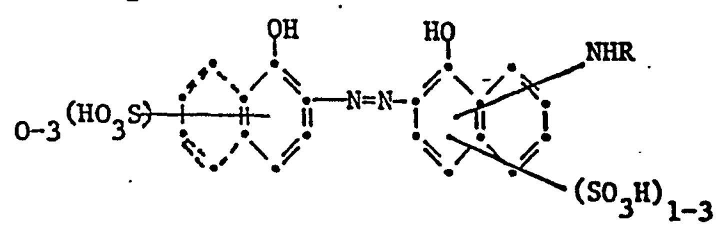

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

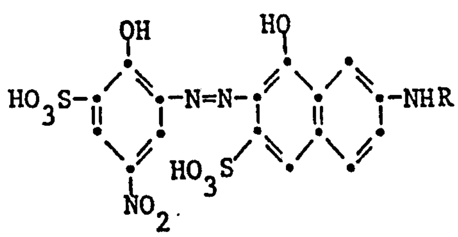

+

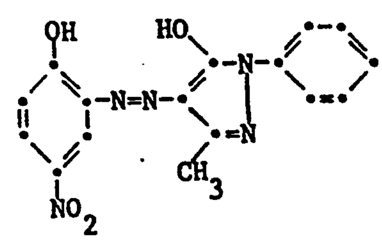

asymmetrischer 1:2-Chromkomplex

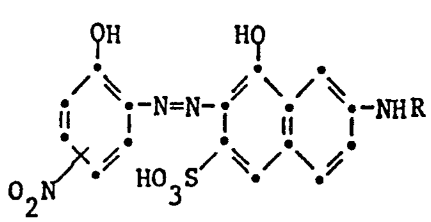

+

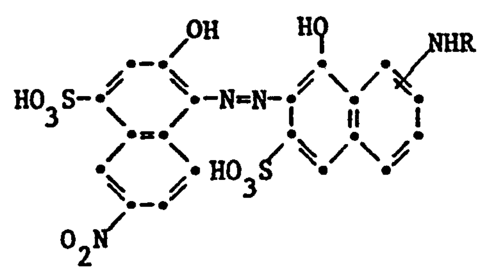

asymmetrischer 1:2-Chrom- oder 1:2-Kobaltkomplex

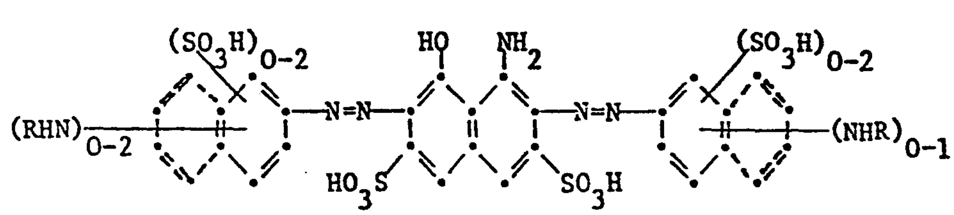

Die durch Strichelungen angedeuteten kondensierten Ringe stehen für alternativ mögliche Naphthalinsysteme.

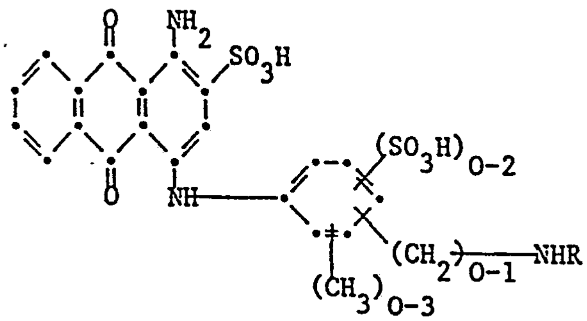

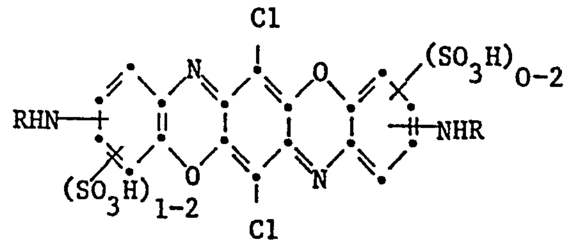

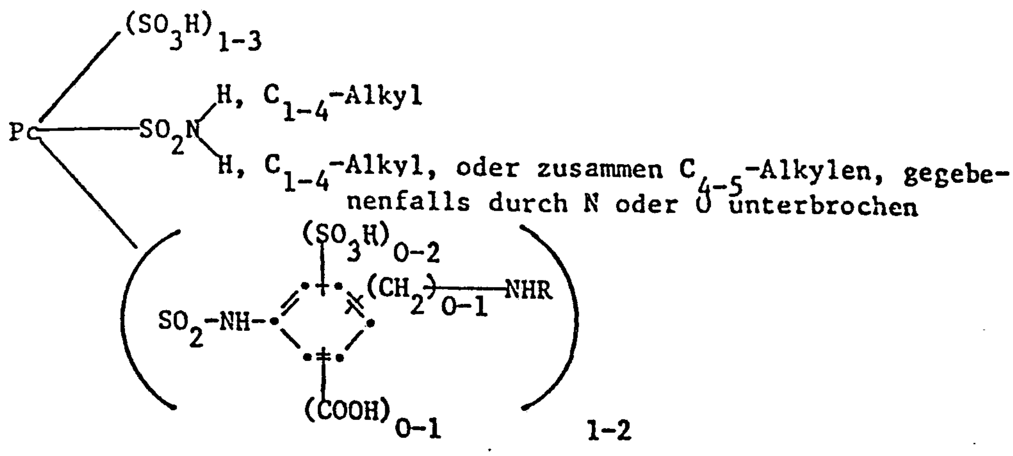


In dieser Formel steht Pc für den Cu- oder Ni-Phthalocyaninrest. Die Gesamtzahl der Substituenten am Pc-Gerüst ist dabei 4.

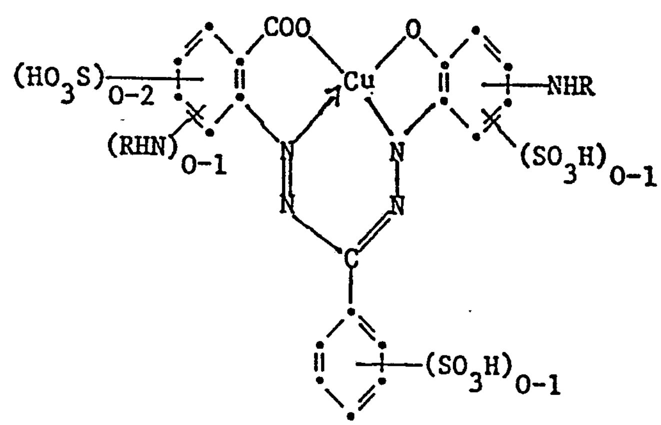

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (2) sind die folgenden:

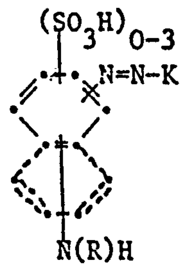

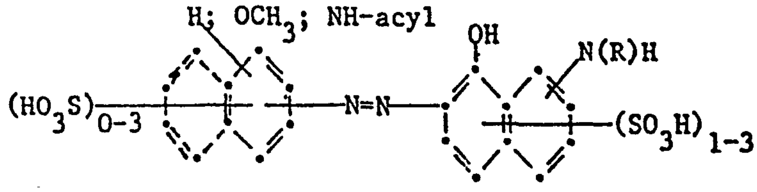

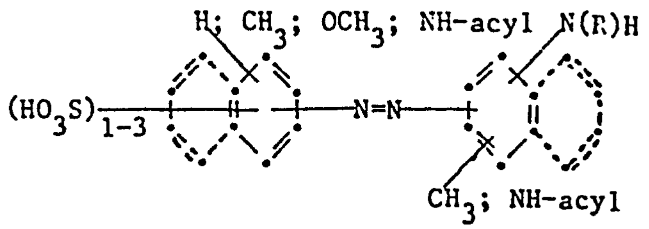

und

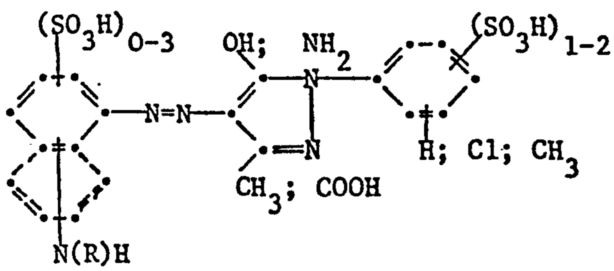

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (2) angegebene Bedeutung hat;

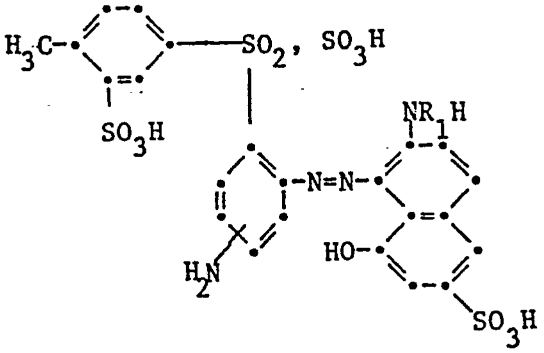

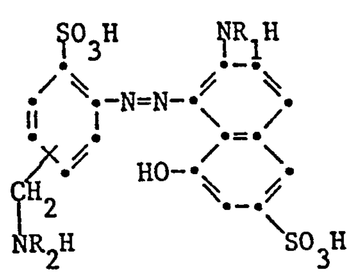

worin $R_1$ und $R_2$ unabhängig voneinander Wasserstoff oder Methyl ist;

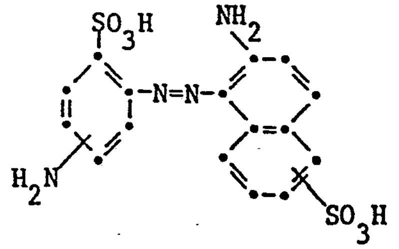

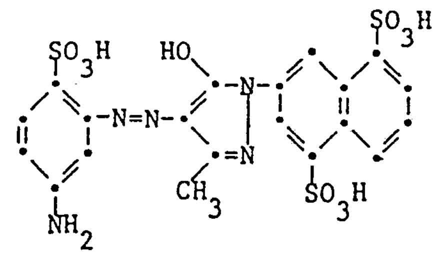

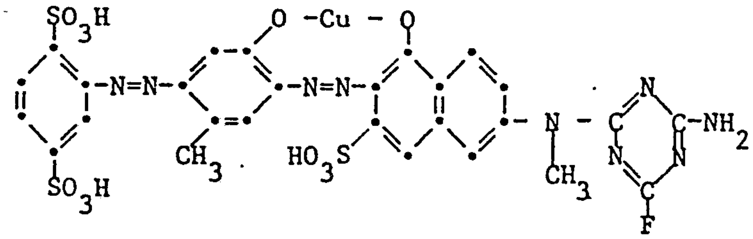

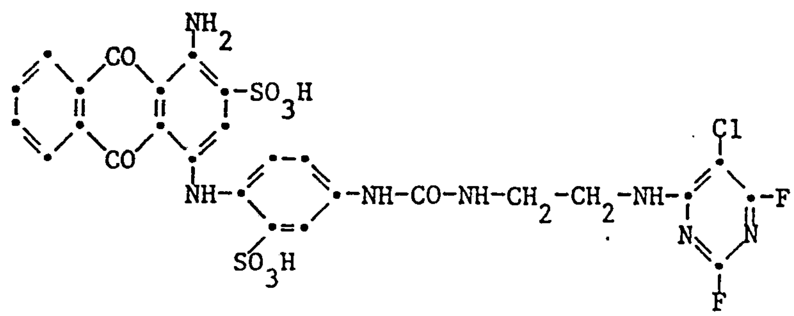

sowie die Metallkomplex-Azofarbstoffe der Formeln

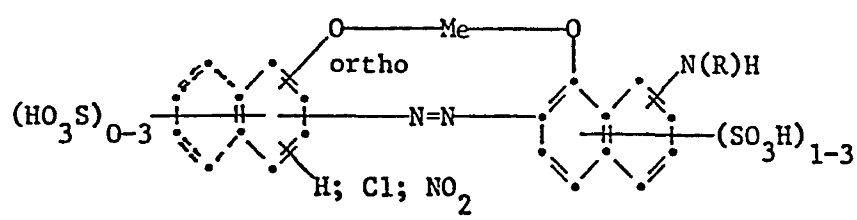

und

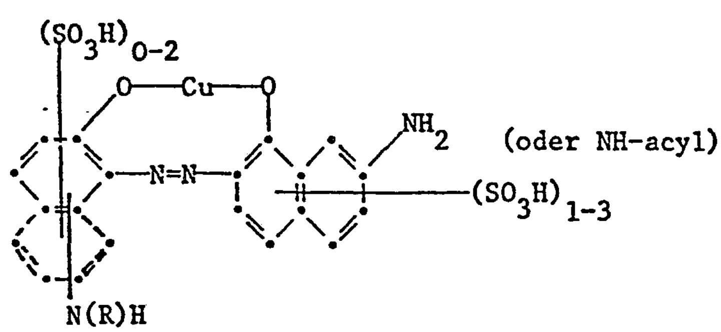

worin R und acyl die oben angegebenen Bedeutungen haben und Me für Cu, Cr oder Co steht.

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, kommen beispielsweise die folgenden in Betracht:

Diazokomponenten:
Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxy-benzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-ace-tylaminobenzol-2-sulfonsäure, 1-Amino-3-acetyl-amino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonapthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 2-Amino-naphthalin-3,6- oder -5,7-disulfonsäure, 1-Aminonaphthalin-3,6- oder 5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder 4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxy-naphthalin-4,8-disulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure.

Kupplungskomponenten:
Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Äthylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Äthylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure,

1-(4'-Aminobenzoylamino)-8-hydroxynaphthalin-3,6- bzw. -4,6-disulfonsäure,
1-(4'-Nitrobenzoylamino)-8-hydroxynaphthalin-3,6- bzw. -4,6-disulfonsäure,
1-(3'-Aminobenzoylamino)-8-hydroxynaphthalin-3,6- bzw. -4,6-disulfonsäure,
1-(3'-Nitrobenzoylamino)-8-hydroxynaphthalin-3,6- bzw. -4,6-disulfonsäure,
2-(4'-Amino-3'-sulfophenylamino)-5-hydroxynaphthalin-7-sulfonsäure,
3-Methylpyrazolon-(5),
1-Phenyl-3-methyl-5-pyrazolon,
1-(4'-Sulfophenyl)-3-methyl-5-pyrazolon,
1-(4'-Sulfophenyl)-pyrazolon-(5)-3-carbonsäure,
1-(3'-Aminophenyl)-3-methyl-5-pyrazolon,
1-(2',5'-Disulfophenyl)-3-methyl-5-pyrazolon,
1-(2'-Methyl-4'-sulfophenyl)-5-pyrazolon-3-carbonsäure,
1-(4',8'-Disulfonaphthyl-[2'])-3-methyl-5-pyrazolon,
1-(5',7'-Disulfonaphthyl-[2'])-3-methyl-5-pyrazolon,
1-(2',5'-Dichlor-4'-sulfophenyl)-3-methyl-5-pyrazolon,
3-Aminocarbonyl-4-methyl-6-hydroxypyridon-(2), 1-Äthyl-3-cyan- oder -3-chlor-4-methyl-6-hydroxypyridon-(2),
1-Äthyl-3-sulfomethyl-4-methyl-6-hydroxy-pyridon-(2), 2,4,6-Triamino-3-cyanpyridin,
2-(3'-Sulfophenylamino)-4,6-diamino-3-cyanpyridin,
2-(2'-Hydroxyäthylamino)-3-cyan-4-methyl-6-aminopyridin,
2,6-Bis-(2'-hydroxyäthylamino)-3-cyan-4-methylpyridin,
1-Äthyl-3-carbamoyl-4-methyl-6-hydroxypyridon-(2),
1-Äthyl-3-sulfomethyl-4-methyl-5-carbamoyl-6-hydroxypyridon-(2), N-Acetoacetylaminobenzol,
1-(N-Acetoacetylamino)-2-methoxybenzol-5-sulfonsäure, 4-Hydroxychinolon-(2),
1-Amino-8-hydroxy-2-(phenylazo)-naphthalin-3,6-disulfonsäure-(2),
1-Amino-8-hydroxy-2-(4'-sulfophenylazo)-naphthalin-3,6-disulfonsäure,
1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente, eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Als Acylierungsmittel, die ausser der acylierenden Stelle noch einen Reaktivrest, der eine kovalente Bindung mit der Seide eingehen kann, enthalten, kommen in Betracht: 2,4,6-Trifluor-5-chlorpyrimidin, 4,6-Difluor-s-triazine, die in 2-Stellung substituiert sind durch einen Aryl- oder Alkylrest, z.B. einen Phenyl-, Methyl- oder Äthylrest, oder durch den Rest einer aliphatischen oder aromatischen, über das Schwefelatom gebundenen Mercapto- bzw. über das Sauerstoffatom gebundenen Hydroxylverbindung oder insbesondere durch eine $-NH_2$ Gruppe oder durch den Rest einer über das Stickstoffatom gebundenen aliphatischen, heterocyclischen oder aromatischen Aminoverbindung.

Die in 2-Stellung substituierten 4,6-Difluor-s-triazine werden z.B. durch Umsetzung von Trifluor-s-triazinen mit den erwähnten Amino-, Hydroxy- oder Mercaptoverbindungen erhalten. Der Substituent in 2-Stellung eines 4,6-Difluor-s-triazins kann z.B. der Rest einer der im folgenden genannten Amino-, Hydroxy- und Mercaptoverbindungen sein.

Ammoniak, Methylamin, Dimethylamin, Äthylamin, Diäthylamin, Propylamin, Isopropylamin, Butylamin, Dibutylamin, Isobutylamin, sek.-Butylamin, tert.-Butylamin, Hexylamin, Methoxyäthylamin, Äthoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Äthylanilin, 3- oder 4-Acetylaminoanilin, 2,5-Dimethoxyanilin, o-, m- und p-Anisidin, o-, m- und p-Phenetidin, Naphthylamin-(1), Naphthylamin-(2), 2-Amino-1-hydroxy-naphthalin, 1-Amino-4-hydroxynaphthalin, 1-Amino-8-hydroxy-naphthalin, 1-Amino-2-hydroxy-naphthalin, 1-Amino-7-hydroxy-naphthalin, Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Aminotoluol-4-sulfonsäure, 2-Aminotoluol-5-sulfonsäure, p-Aminosalicylsäure, 1-Amino-4-carboxybenzol-3-sulfonsäure, 1-Amino-2-carboxy-benzol-5-sulfonsäure, 1-Amino5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, 2,4,7-, 2,5,7-, 3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin, Wasser, Methanol, Äthanol, Propanol, Isopropanol, n-Butanol, Isobutanol, sek.-Butanol, tert-Butanol, Hexanol, 4,6-difluor-s-triazin, 2-N-Methyl-N-phenylamino-4,6-difluor-s-triazin, 2-(Methylphenylamino)-4,6-difluor-s-triazin, 2-(Chlorphenylamino)-4,6-difluor-s-triazin, 2-(Sulfophenylamino)-4,6-difluor-s-triazin, 2-N-Methyl-N-(methylphenylamino)-4,6-difluor-s-triazin, 2-N-Methyl-N-(chlorphenylamino)-4,6-difluor-s-triazin, 2-N-Methyl-N-(sulfophenylamino)-4,6-difluor-s-triazin und 2-(Chloräthylsulfonyläthylamino)-4,6-difluor-s-triazin.

Die Acylierungen mit den faserreaktiven Acylierungsmitteln führt man zweckmässig unter Verwendung säurebindender Mittel, wie Natriumbicarbonat, Natriumcarbonat oder Natriumhydroxyd, und unter solchen Bedingungen aus, dass im fertigen Produkt noch austauschbare Halogenatome, ungesättigte Bindungen oder dergleichen im Reaktivrest übrigbleiben, d.h. z.B. in organischen Lösungsmitteln oder bei relativ niedrigen Temperaturen in wässerigem Mittel.

Eine weitere Anwendung des erfindungsgemässen Verfahrens ist dadurch gekennzeichnet, dass man seidenhaltige gemischte Fasermaterialien mit Farbstoffmischungen färbt oder bedruckt, wobei mindestens eine Mischungskomponente ein Farbstoff der Formel (1) ist und die übrigen Mischungskomponente nicht-faserreaktive Farbstoffe sind.

Nach dem erfindungsgemässen Verfahren wird Seide oder seidenhaltiges gemischtes Fasermaterial gefärbt oder bedruckt. Als Seide kommt nicht nur die Natur- oder Zuchtseide (Maulbeerseide, Bombyx mori) sondern auch die verschiedenen Wildseiden, vor allem Tussahseide, ferner Eri- und Fagaraseiden, Nester-Seide, Senegal-Seide, Muga-Seide, sowie Muschel- und Spinnseide in Betracht. Seidenhaltige Fasermaterialien sind insbesondere Mischungen von Seide mit Polyesterfasern, Acrylfasern, Cellulosefasern, Polyamidfasern oder Wolle. Das genannte Textilmaterial kann dabei in den verschiedensten Verarbeitungsformen vorliegen, z.B. als Faser, Garn, Gewebe oder Gewirke.

Nach dem erfindungsgemässen Verfahren wird das Färben oder Bedrucken in wässrigem Medium bei einer Temperatur von 50 bis 130°C und bei einem pH von 8 bis 11 vorgenommen. Die Ausführung gestaltet sich so, dass das zu färbende Material bei gewöhnlicher oder erhöhter Temperatur in das Färbebad gebracht wird bzw. mit der wässrigen Druckpaste bedruckt wird, das Bad bzw. das bedruckte Material auf höhere Temperatur gebracht wird, und schliesslich die Färbung bzw. der Druck in dem genannten Temperatur- und pH-Bereich fixiert wird. Dabei hängt es vom Material, der Art des Reaktivfarbstoffes und der gewünschten Farbstärke ab, in welchem Temperaturintervall man am vorteilhaftesten arbeitet. So wird Zuchtseide mit Aminofluortriazinfarbstoffen vorzugsweise zwischen 50 und 60°C gefärbt (fixiert), während Tussahseide mit Aminofluortriazinfarbstoffen vorteilhaft bei 65 bis 75°C gefärbt wird. In anderen Fällen geht man bei der Färbung der Tussahseide auf 85 bis 95°C, besonders bei dunklen Nuancen.

Vorzugsweise färbt man bei einer Temperatur zwischen 60 und 90°C. Die Fixierung erfolgt vorzugsweise gegen Ende des Färbeprozesses und insbesondere bei pH 8,5 bis 9,5.

Eine bevorzugte Ausführungsform des Verfahrens ist dadurch gekennzeichnet, dass man Zuchtseide (bombyx mori) mit Amino-fluor-s-triazinfarbstoffen bei einer Temperatur zwischen 50 und 60°C, und mit 2,4-Difluor-5-chlorpyrimidin-Reaktivfarbstoffen bei einer Temperatur zwischen 60 und 80°C färbt.

Eine weitere bevorzugte Ausführungsform ist dadurch gekennzeichnet, dass man Tussahseide mit Amino-fluor-s-triazinfarbstoffen bei einer Temperatur zwischen 60 und 75°C, und mit 2,4-Difluor-5-chlorpyrimidin-Reaktivfarbstoffen bei einer Temperatur zwischen 70 und 100°C färbt.

Zur Durchführung des erfindungsgemässen Verfahrens im alkalischen pH-Bereich werden als alkalische säurebindende Mittel beispielsweise Natriumhydroxyd, Kaliumhydroxyd oder ein Alkalisalz einer schwachen Säure, wie Natriumcarbonat oder -bicarbonat, Trinatriumphosphat, Dinatriumphosphat, Natriumsilikat oder trichloressigsaures Natrium oder Mischungen aus diesen säurebindenden Mitteln verwendet.

Erfolgt das Färben nach dem Ausziehverfahren, so enthält das Färbebad eines oder mehrere der oben genannten säurebindenden Mittel und gegebenenfalls die üblichen Zusätze, wie anorganische Salze, Harnstoff, Netzmittel oder andere weiter unten genannte Hilfsmittel. Die Ware wird mit den wässrigen, gegebenenfalls salzhaltigen Farbstofflösungen imprägniert, und die Farbstoffe werden nach einer Alkalibehandlung oder in Gegenwart von Alkali unter Wärmeeinwirkung fixiert.

Die Fixierung der Drucke im alkalischen Bereich durch Hitzebehandlung kann nach verschiedenen, in der Technik üblichen Methoden erfolgen, beispielsweise durch Dämpfen mit Sattdampf bei ca. 100 bis 103°C (Pad-steam-Verfahren) durch Hindurchführen durch heisse, stark salzhaltige Lösungen, durch heisse Dämpfe indifferenter organischer Lösungsmittel oder durch Hinüberleiten der geklotzten oder bedruckten Stoffbahn über eine Reihe beheizter Walzen.

Die Färbeflotten und Druckpasten können ausser dem Alkali die allgemein üblichen Zusätze enthalten, die Lösungen beispielsweise anorganische Salze, wie Alkalichloride oder Alkalisulfate, Harnstoff, Alginatverdickungen, wasserlösliche Cellulosealkyläther sowie Dispergierungs- und Egalisierhilfsmittel, die Druckpasten beispielsweise Harnstoff, Natrium-m-nitrobenzolsulfonat und die üblichen Verdickungsmittel, wie Methylcellulose, Stärkeäther, Emulsionsverdikkungen oder vorzugsweise ein Alginat, z.B. Natriumalginat.

Die Farbstoffe werden, je nach der gewünschten Farbtiefe der Färbung in Mengen von etwa 0,1 bis 15% angewandt.

Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Eine bevorzugte Ausführungsform ist dadurch gekennzeichnet, dass man die gefärbte Ware in einer wässrigen Waschflotte bei einem pH von 8,5 bis 9 und erhöhter Temperatur, vorzugsweise 70 bis 80°C, gegebenenfalls in Gegenwart eines nichtionischen Waschmittels, auswäscht.

Vorzugsweise wird das erfindungsgemässe Verfahren nach der Ausziehfärbemethode ausgeführt.

Die mit den erfindungsgemäss zur Anwendung gelangenden Reaktivfarbstoffen hergestellten Färbungen und Drucke zeichnen sich durch klare Nuancen aus. Es werden hohe Fixierwerte erzielt, und die Färbungen und Drucke besitzen hohe Farbstärken, gute Lichtechtheiten und sehr gute Nassechtheitseigenschaften.

Hervorzuheben ist insbesondere die faserschonende Verfahrensweise des erfindungsgemässen Verfahrens.

Im Journal of the Society of Dyers and Colourists, Band 99 (Februar 1983) Seiten 56 bis 59 sowie Band 98 (November 1982) Seiten 394 bis 397 und in der US-A 2 950 165 werden Verfahren zum Färben von Seide beschrieben. Aus der FR-A 1 217 081, Fachorgan für Textilveredlung 16 (7) Seiten 455 und 456 (1961) und der EP-A 0 043 331 sind weitere Verfahren zum Färben oder Bedrukken von Seide mit Reaktivfarbstoffen mit strukturell verschiedenen Reaktivgruppen bekannt.

Die nachfolgenden Beispiele dienen zur Erläuterung der Erfindung. Die Temperaturen sind in Celsiusgraden angegeben. Die Prozentangaben beziehen sich auf Gewichtsprozente, sofern nicht anders vermerkt.

Beispiel 1

Ein Färbegefäss eines Laborfärbeapparates wird mit 1000 ml Wasser von 30°C gefüllt und

25 g Tussahgewebe werden eingebracht und das Färbegut fortwährend bewegt. Nach 5 min werden

0,5 g Reaktivfarbstoff der Formel

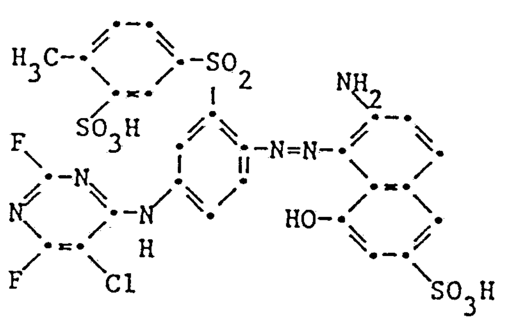

vorgelöst in

20 ml heissem Wasser langsam zugesetzt. Nach 10 min bei 30°C werden

20 g $Na_2SO_4$ oder NaCl zugesetzt und dann wird das Bad mit einer Geschwindigkeit von 1°C pro Minute auf 85°C aufgeheizt. Bei Erreichen von 45°C werden weitere

20 g $Na_2SO_4$ oder NaCl zugesetzt und bei 60°C weitere

20 g $Na_2SO_4$ oder NaCl zugesetzt. 20 min nach Erreichen der Färbetemperatur von 85°C ist die Hauptmenge des Farbstoffes aufgezogen. Der pH-Wert des Färbebades beträgt, je nach Vorbehandlung des Rohmaterials 4,5-6,5. Es werden nun ca.

2 g Soda wasserfrei zugegeben, so dass der pH-Wert auf 8,5-9,7 steigt. Es wird weitere 20 min bei 85°C gefärbt, dann abgekühlt und gründlich gespült. Ein neues Bad wird bereitet aus

1000 ml Wasser von 70°C und

1 g eines nichtionischen Waschmittels – erhalten durch Anlagerung von 10 Äquivalenten Äthylenoxid an iso-Nonylphenol. Das Färbegut wird 15 min bei 70°C in der Waschflotte bewegt dann abgekühlt und gründlich gespült. Anschliessend wird das Färbegut in einem Bad von 40°C bestehend aus

1000 ml Wasser und

1 ml Ameisensäure 85% während 10 min abgesäuert und dann wie üblich entwässert und getrocknet.

Es wird eine blaustichig rote Färbung mittlerer Farbtiefe mit guten Nassechtheiten erhalten.

Beispiel 2

Ein Färbegefäss eines Laborfärbeapparates wird mit

1000 ml Wasser von 30°C gefüllt und

25 g Seidengarn (bombyx mori), werden eingebracht und das Färbegut fortwährend bewegt. Nach 5 min werden

0,25 g Reaktivfarbstoff der Formel

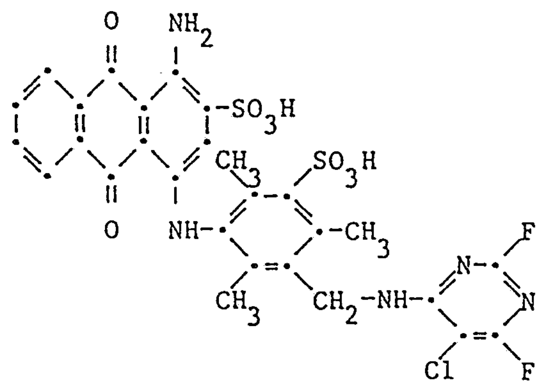

vorgelöst in

20 ml heissem Wasser langsam zugesetzt. Nach 10 min bei 30°C werden

20 g $Na_2SO_4$ oder NaCl zugesetzt und dann wird das Bad mit einer Geschwindigkeit von 1°C pro Minute auf 70°C aufgeheizt. Bei Erreichen von 45°C werden weitere

20 g $Na_2SO_4$ oder NaCl zugesetzt und bei 60°C weitere

20 g $Na_2SO_4$ oder NaCl zugesetzt. 15 min nach Erreichen der Färbetemperatur von 70°C ist die Hauptmenge des Farbstoffes aufgezogen. Der pH-Wert des Färbebades beträgt, je nach Vorbehandlung des Rohmaterials 4,5-6,5. Es werden nun ca.

2 g Soda wasserfrei zugegeben, so dass der pH-Wert auf 8,5 steigt. Es wird weitere 20 min bei

70°C gefärbt, dann abgekühlt und gründlich gespült. Ein neues Bad wird bereitet aus
1000 ml Wasser von 70°C und
1 g eines nichtionischen Waschmittels – erhalten durch Anlagerung von 10 Äquivalenten Äthylenoxidan iso-Nonylphenol. Das Färbegut wird 15min bei 70°C in der Waschflotte bewegt dann abgekühlt und gründlich gespült. Anschliessend wird das Färbegut in einem Bad von 40° bestehend aus
1000 ml Wasser und
1 ml Ameisensäure 85% während 10 min abgesäuert und dann wie üblich entwässert und getrocknet.

Es wird eine rotstichig blaue Färbung mit sehr guten Nassechtheiten erhalten.

Ähnliche Färbungen mit sehr guten Nassechtheiten werden mit dem folgenden Farbstoff erhalten:

| Menge | Reaktivfarbstoff der Formel | Nuance | Farbtiefe |
|---|---|---|---|
| 0,25 g | 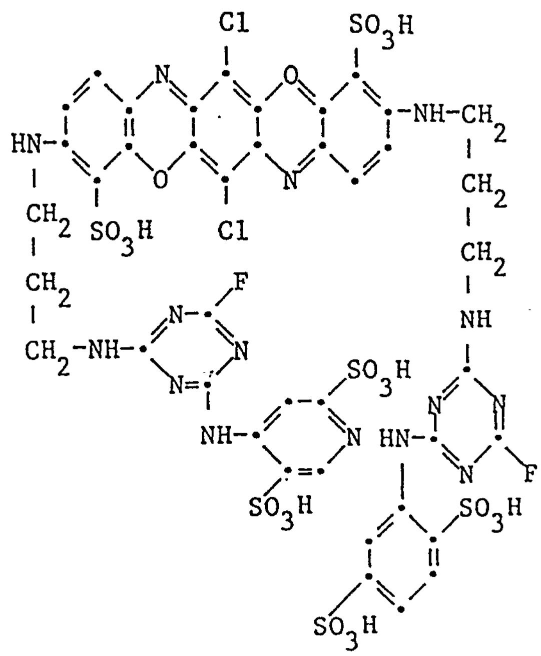 | blau | hell |

Beispiel 3

Eine Haspelkufe wird mit
1000 l Wasser von 30°C gefüllt und anschliessend mit 5 Stücken zu je 5 kg, d.h.
25 kg Wolle-Tussah-Gewebe beladen. Während 10 min wird das Gewebe gründlich genetzt. Dann werden
500 g Reaktivfarbstoff der Formel

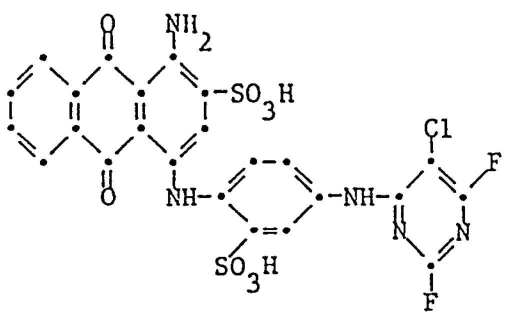

gelöst in
10 l heissem Wasser dem Färbebad gleichmässig verteilt zugesetzt. Nach 10 min Betrieb bei 30°C mit einer Umlaufgeschwindigkeit von 50 m/min werden
30 kg Glaubersalz oder NaCl in fester Form zugegeben. Die Flotte wird nun bei gleichbleibender Umlaufgeschwindigkeit von 50 m/min um 1°C je Minute auf 80°C erwärmt. Bei 45°C werden
30 kg Glaubersalz oder NaCl und bei 60°C nochmals
30 kg Glaubersalz oder NaCl zugesetzt. 20 min nach Erreichen der Färbetemperatur von 80°C werden ca.
2 kg Pottasche wasserfrei zugesetzt, wobei der pH-Wert der Flotte auf 10 ansteigt. Das Färbegut wird weitere 20 min bei 80°C und Umlaufgeschwindigkeit 50 m/min gehalten. Durch Zulauf von kaltem Wasser wird auf 40°C abgekühlt, und die Flotte abgelassen. Es wird mit
1000 l kaltem oder warmem Wasser gespült und das Spülbad nach 5–10 min abgelassen.
1000 l kaltes (oder warmes) Wasser werden eingefüllt und
1 kg eines Wasch- und Netzmittels – erhalten durch Anlagerung von 10 Äquivalenten Äthylenoxid an iso-Nonylphenol – werden zugesetzt und das Bad auf 60°C erhitzt. Nach 15 min Betrieb mit 50 m/min Umlaufgeschwindigkeit – wobei der pH-Wert bei mindestens 8,5 liegen muss und gegebenenfalls durch Sodazugabe auf diesen Wert gebracht werden muss – wird durch Zulauf von

kaltem Wasser auf 40°C abgekühlt und die Flotte abgelassen. Mit
1000 l kaltem Wasser wird klar gespült und der Spülprozess ein- oder mehrmals wiederholt. Dem letzten Spülbad wird
1 l Ameisensäure 85% zugesetzt, das Bad auf 40°C erhitzt und 10 min in Betrieb gehalten. Die Flotte wird abgelassen und die gefärbte Ware wie üblich entwässert und getrocknet. Es wird eine brillante blaue Färbung mit guten Nassechtheiten erhalten.

Ähnliche Färbungen mit sehr guten Nassechtheiten werden mit den folgenden Farbstoffen erhalten:

| Menge | Reaktivfarbstoff der Formel | Nuance | Farbtiefe |
|---|---|---|---|
| 250 g | 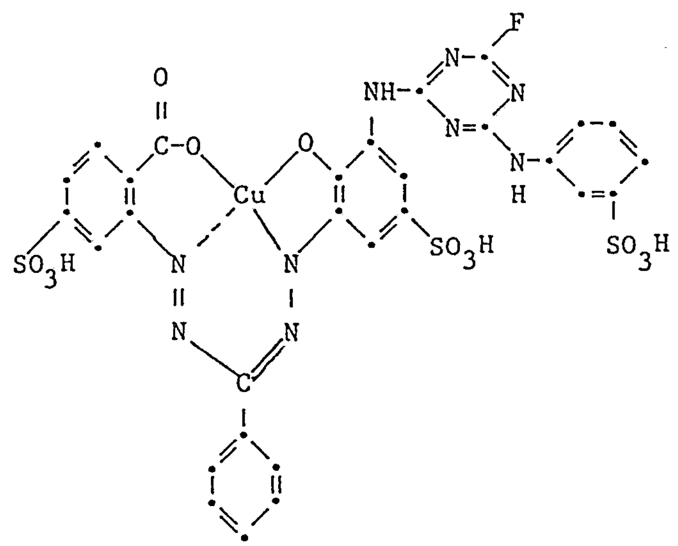 | blau | hell |
| 25 g | 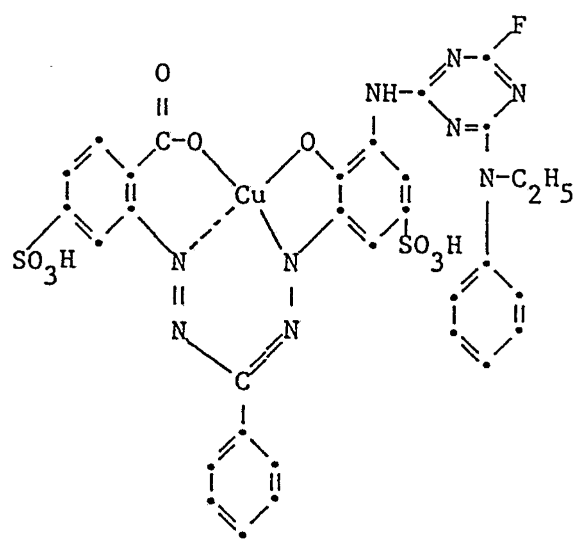 | blau | pastell |

Beispiel 4

Eine Haspelkufe wird mit
1000 l Wasser von 30°C gefüllt und anschliessend mit 5 Stücken zu je 5 kg, d.h.
25 kg Wolle-Tussah-Mischgewebe 50/50 beladen. Während 10 min wird das Gewebe gründlich genetzt. Dann werden
25 g Reaktivfarbstoff der Formel

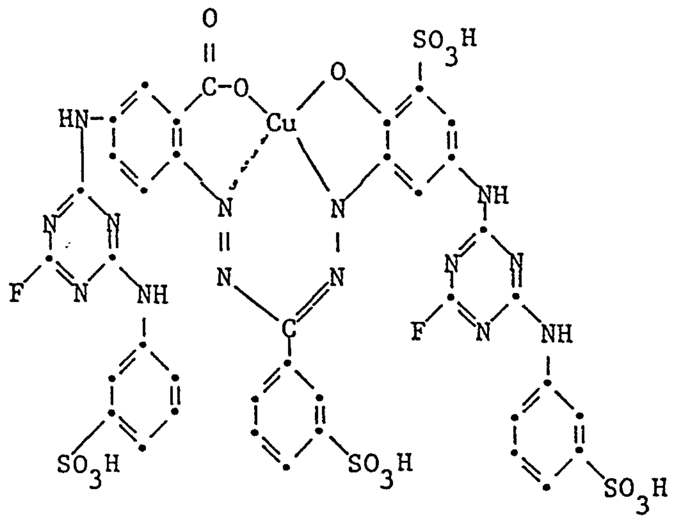

gelöst in

10 l heissem Wasser dem Färbebad gleichmässig verteilt zugesetzt. Nach 10 min Betrieb bei 30°C mit einer Umlaufgeschwindigkeit von 50 m/min werden

30 kg Glaubersalz oder NaCl in fester Form zugegeben. Die Flotte wird nun bei gleichbleibender Umlaufgeschwindigkeit von 50 m/min um 1°C je Minute auf 60°C erwärmt. Bei 45°C werden

30 kg Glaubersalz oder NaCl und bei 60°C nochmals

30 kg Glaubersalz oder NaCl zugesetzt. 20 min nach Erreichen der Färbetemperatur von 60°C werden ca.

2 kg Soda wasserfrei zugesetzt, wobei der pH-Wert der Flotte auf 8,5–9,5 ansteigt. Das Färbegut wird weitere 20 min bei 60°C und Umlaufgeschwindigkeit 50 m/min gehalten. Durch Zulauf von kaltem Wasser wird auf 40°C abgekühlt, die Flotte abgelassen. Es wird mit

1000 l kaltem oder warmem Wasser gespült und das Spülbad nach 5–10 min abgelassen.

1000 l kaltes (oder warmes) Wasser werden eingefüllt und

1 kg eines Wasch- und Netzmittels – erhalten durch Anlagerung von 10 Äquivalenten Äthylenoxid an iso-Nonylphenol – werden zugesetzt und das Bad auf 60°C erhitzt. Nach 15 min Betrieb mit 50 m/min Umlaufgeschwindigkeit – wobei der pH-Wert bei mindestens 8,5 liegen muss und gegebenenfalls durch Sodazugabe auf diesen Wert gebracht werden muss – wird durch Zulauf von kaltem Wasser auf 40°C abgekühlt und die Flotte abgelassen. Mit

1000 l kaltem Wasser wird klar gespült und der Spülprozess ein- oder mehrmals wiederholt. Dem letzten Spülbad wird

1 l Ameisensäure 85% zugesetzt, das Bad auf 40°C erhitzt und 10 min in Betrieb gehalten. Die Flotte wird abgelassen und die gefärbte Ware wie üblich entwässert und getrocknet. Es wird eine helle blaue Färbung mit guter Nassechtheit erhalten.

Beispiel 5

Eine Haspelkufe wird mit

1000 l Wasser von 30°C gefüllt und anschliessend mit 5 Stücken zu je 5 kg d.h.

25 kg Tussahseidengewebe beladen. Während 10 min wird das Gewebe gründlich genetzt. Dann werden

1500 kg Reaktivfarbstoff der Formel

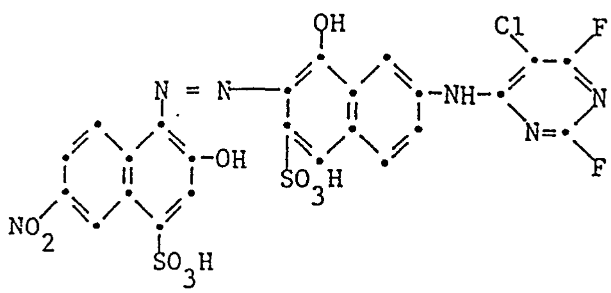

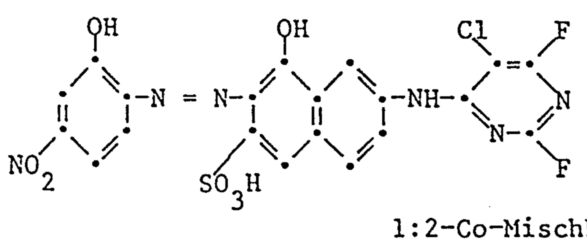

1:2-Co-Mischkomplex

gelöst in
20 l heissem Wasser dem Färbebad gleichmässig verteilt zugesetzt. Nach 10 min Betrieb bei 30°C mit einer Umlaufgeschwindigkeit von 50 m/min werden
40 kg Glaubersalz oder NaCl in fester Form zugegeben. Die Flotte wird nun bei gleichbleibender Umlaufgeschwindigkeit von 50 m/min um 1°C je Minute auf 95°C erwärmt. Bei 45°C werden
40 kg Glaubersalz oder NaCl und bei 60°C nochmals
40 kg Glaubersalz oder NaCl zugesetzt. 25 min nach Erreichen der Färbetemperatur von 95°C werden ca.
2 kg Kaliumcarbonat wasserfrei zugesetzt, wobei der pH-Wert der Flotte auf 10,0 ansteigt. Das Färbegut wird weitere 25 min bei 95°C und Umlaufgeschwindigkeit 50 m/min gehalten. Durch Zulauf von kaltem Wasser wird auf 40°C abgekühlt, die Flotte abgelassen. Es wird mit
1000 l kaltem oder warmem Wasser gespült und das Spülbad nach 5-10 min abgelassen.
1000 l kaltes (oder warmes) Wasser werden eingefüllt und
1 kg eines Wasch- und Netzmittels - erhalten durch Anlagerung von 10 Äquivalenten Äthylenoxid an iso-Nonylphenol - werden zugesetzt und das Bad auf 70°C erhitzt. Nach 15 min Betrieb mit 50 m/min Umlaufgeschwindigkeit - wobei der pH-Wert bei mindestens 8,5 liegen muss und gegebenenfalls durch Sodazugabe auf diesen Wert gebracht werden muss - wird durch Zulauf von kaltem Wasser auf 40°C abgekühlt und die Flotte abgelassen. Mit
1000 l kaltem Wasser wird klar gespült und der Spülprozess ein- oder mehrmals wiederholt. Dem letzten Spülbad wird
1 l Ameisensäure 85% zugesetzt, das Bad auf 40°C erhitzt und 10 min in Betrieb gehalten. Die Flotte wird abgelassen und die gefärbte Ware wie üblich entwässert und getrocknet. Es wird eine tiefe schwarze Färbung mit guten Nassechtheiten erhalten.

Beispiel 6

Eine Haspelkufe wird mit
1000 l Wasser von 30°C gefüllt und anschliessend mit 5 Stücken zu je 5 kg d.h.
25 kg Seidengewebe (bombyx mori) beladen. Während 10 min wird das Gewebe gründlich genetzt. Dann werden
500 g Reaktivfarbstoff der Formel

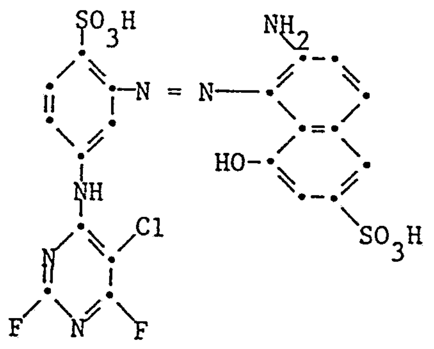

gelöst in
10 l heissem Wasser dem Färbebad gleichmässig verteilt zugesetzt. Nach 10 min Betrieb bei 30°C mit einer Umlaufgeschwindigkeit von 50 m/min werden
20 kg Glaubersalz oder NaCl in fester Form zugegeben. Die Flotte wird nun bei gleichbleibender Umlaufgeschwindigkeit von 50 m/min um 1°C je Minute auf 70°C erwärmt. Bei 45°C werden
20 kg Glaubersalz oder NaCl und bei 60°C nochmals
20 kg Glaubersalz oder NaCl zugesetzt. 20 min nach Erreichen der Färbetemperatur von 70°C werden ca.
2 kg Soda wasserfrei zugesetzt, wobei der pH-Wert der Flotte auf 8,5-9,5 ansteigt. Das Färbegut wird weitere 20 min bei 70°C und Umlaufgeschwindigkeit 50 m/min gehalten. Durch Zulauf von kaltem Wasser wird auf 40°C abgekühlt, die Flotte abgelassen. Es wird mit
1000 l kaltem oder warmem Wasser gespült und das Spülbad nach 5-10 min abgelassen.
1000 l kaltes (oder warmes) Wasser werden eingefüllt und
1 kg eines Wasch- und Netzmittels - erhalten durch Anlagerung von 10 Äquivalenten Äthylenoxid an iso-Nonylphenol - werden zugesetzt und das Bad auf 70°C erhitzt. Nach 15 min Betrieb mit 50 m/min Umlaufgeschwindigkeit - wobei der pH-Wert bei mindestens 8,5 liegen muss und gegebenenfalls durch Sodazugabe auf diesen Wert gebracht werden muss - wird durch Zulauf von kaltem Wasser auf 40°C abgekühlt und die Flotte abgelassen. Mit
1000 l kaltem Wasser wird klargespült und der Spülprozess ein- oder mehrmals wiederholt. Dem letzten Spülbad wird
1 l Ameisensäure 85% zugesetzt, das Bad auf 40°C erhitzt und 10 min in Betrieb gehalten. Die Flotte wird abgelassen und die gefärbte Ware wie üblich entwässert und getrocknet. Es wird eine brillante rote Färbung mit sehr guten Nassechtheiten erhalten.

Beispiel 7

Ein Färbegefäss eines Laborfärbeapparates wird mit
1000 ml Wasser von 30 °C gefüllt und
25 g Seidengewebe (bombyx mori) werden eingebracht und das Färbegut fortwährend bewegt. Nach 5 min werden
0,25 g Reaktivfarbstoff der Formel

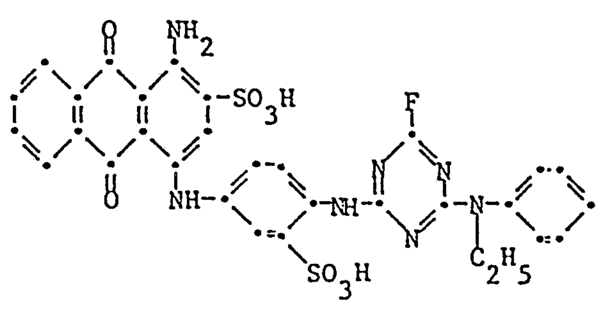

vorgelöst in
20 ml heissem Wasser langsam zugesetzt. Nach 10 min bei 30°C werden
10 g $Na_2SO_4$ oder NaCl zugesetzt und dann wird das Bad mit einer Geschwindigkeit von 1°C pro Minute auf 55°C aufgeheizt. Bei Erreichen von 40°C werden weiter
10 g $Na_2SO_4$ oder NaCl zugesetzt und bei 50°C weitere
10 g $Na_2SO_4$ oder NaCl zugesetzt. 10 min nach Erreichen der Färbetemperatur von 55°C ist die Hauptmenge des Farbstoffes aufgezogen. Der pH-Wert des Färbebades beträgt, je nach Vorbehandlung des Rohmaterials 4,5–6,5. Es werden nun ca.
2 g Soda wasserfrei zugegeben. Der pH-Wert steigt auf 8,5–9,7. Es wird weitere 20 min bei 55°C gefärbt, dann abgekühlt und gründlich gespült. Ein neues Bad wird bereitet aus
1000 ml Wasser von 60°C und
1 g eines nichtionischen Waschmittels – erhalten durch Anlagerung von 10 Äquivalenten Äthylenoxid an iso-Nonylphenol. Das Färbegut wird 15 min bei 60°C in der Waschflotte bewegt dann abgekühlt und gründlich gespült. Anschliessend wird das Färbegut in einem Bad von 40°C bestehend aus
1000 ml Wasser und
1 ml Ameisensäure 85% während 10 min abgesäuert und dann wie üblich entwässert und getrocknet.
Es wird eine grünstichig blaue Färbung mit guten Nassechtheiten erhalten.

Beispiel 8
Ein Färbegefäss eines Laborfärbeapparates wird mit
1000 ml Wasser von 30°C gefüllt und
25 g Seidengewebe (bombyx mori) werden eingebracht und das Färbegut fortwährend bewegt. Nach 5 min werden
1,25 g Reaktivfarbstoff der Formel

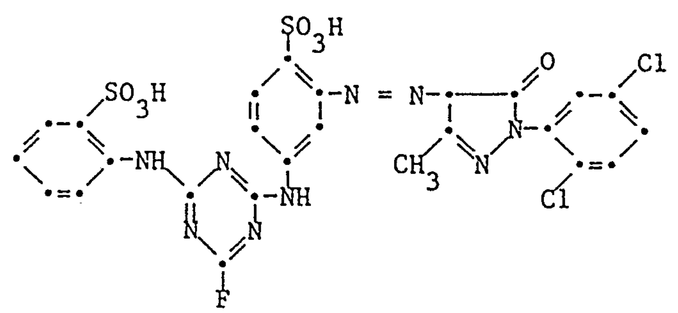

vorgelöst in
20 ml heissem Wasser langsam zugesetzt. Nach 10 min bei 30°C werden
30 g $Na_2SO_4$ oder NaCl zugesetzt und dann wird das Bad mit einer Geschwindigkeit von 1°C pro Minute auf 60°C aufgeheizt. Bei Erreichen von 45°C werden weiter
30 g $Na_2SO_4$ oder NaCl zugesetzt und bei 60°C weitere
30 g $Na_2SO_4$ oder NaCl zugesetzt. 20 min nach Erreichen der Färbetemperatur von 60°C ist die Hauptmenge des Farbstoffes aufgezogen. Der pH-Wert des Färbebades beträgt, je nach Vorbehandlung des Rohmaterials 4,5–6,5. Es werden nun ca.
2 g Soda wasserfrei zugegeben. Der pH-Wert steigt auf 8,5–9,7. Es wird weitere 25 min bei 60°C gefärbt, dann abgekühlt und gründlich gespült. Ein neues Bad wird bereitet aus
1000 ml Wasser von 60°C und
1 g eines nichtionischen Waschmittels – erhalten durch Anlagerung von 10 Äquivalenten Äthylenoxid an iso-Nonylphenol. Das Färbegut wird 15 min bei 60°C in der Waschflotte bewegt dann abgekühlt und gründlich gespült. Anschliessend wird das Färbegut in einem Bad von 40°C bestehend aus
1000 ml Wasser und
1 ml Ameisensäure 85% während 10 min abgesäuert und dann wie üblich entwässert und getrocknet.
Es wird eine leuchtend gelbe Färbung mit guten Nassechtheiten erhalten.

Beispiel 9
Eine Haspelkufe wird mit
1000 l Wasser von 30°C gefüllt und anschliessend mit 5 Stücken zu je 5 kg, d.h.
25 kg Tussah-Seidengewebe beladen. Während 10 min wird das Gewebe gründlich genetzt. Dann werden
1250 g Reaktivfarbstoff der Formel

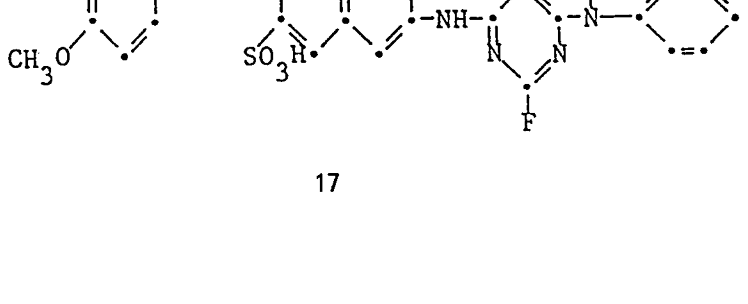

gelöst in
20 l heissem Wasser dem Färbebad gleichmässig verteilt zugesetzt. Nach 10 min Betrieb bei 30°C mit einer Umlaufgeschwindigkeit von 50 m/min werden
40 kg Glaubersalz oder NaCl in fester Form zugegeben. Die Flotte wird nun bei gleichbleibender Umlaufgeschwindigkeit von 50 m/min um 1°C je Minute auf 85°C erwärmt. Bei 45°C werden
40 kg Glaubersalz oder NaCl und bei 60°C nochmals
40 kg Glaubersalz oder NaCl zugesetzt. 20 min nach Erreichen der Färbetemperatur von 85°C werden ca.
2 kg Soda wasserfrei zugesetzt, wobei der pH-Wert der Flotte auf 8,5–9,5 ansteigt. Das Färbegut wird weitere 25 min bei 85°C und Umlaufgeschwindigkeit 50 m/min gehalten. Durch Zulauf von kaltem Wasser wird auf 40°C abgekühlt, die Flotte abgelassen. Es wird mit
1000 ml kaltem oder warmem Wasser gespült und das Spülbad nach 5–10 min abgelassen
1000 l kaltes (oder warmes) Wasser werden eingefüllt und
1 kg eines Wasch- und Netzmittels – erhalten durch Anlagerung von 10 Äquivalenten Äthylenoxid an iso-Nonylphenol – werden zugesetzt und das Bad auf 70°C erhitzt. Nach 15 min Betrieb mit 50 m/min Umlaufgeschwindigkeit – wobei der pH-Wert bei mindestens 8,5 liegen muss und gegebenenfalls durch Sodazugabe auf diesen Wert gebracht werden muss – wird durch Zulauf von kaltem Wasser auf 40°C abgekühlt und die Flotte abgelassen. Mit
1000 l kaltem Wasser wird klar gespült und der Spülprozess ein- oder mehrmals wiederholt. Dem letzten Spülbad wird
1 l Ameisensäure 85% zugesetzt, das Bad auf 40°C erhitzt und 10 min in Betrieb gehalten. Die Flotte wird abgelassen und die gefärbte Ware wie üblich entwässert und getrocknet. Es wird eine brillante Scharlachfärbung mit guten Nassechtheiten erhalten.
Ähnliche Färbung mit guten Nassechtheiten werden mit der folgenden Farbstoffmischung erhalten:

| Menge | Reaktivfarbstoff der Formel | Nuance | Farbtiefe |
|---|---|---|---|
| | Mischung aus | | |
| 1250 g | 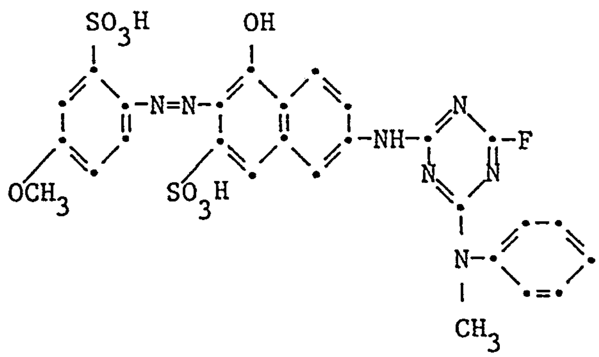 | | |
| | und | | |
| 250 g | 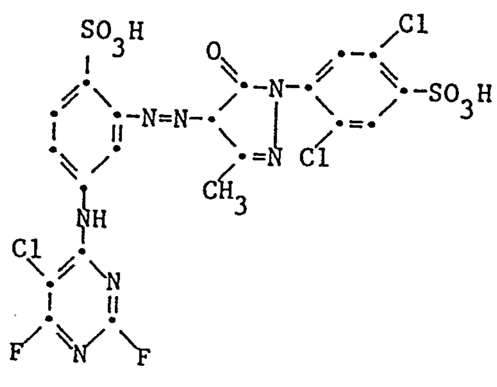 | gelbstichiges rot | tief |

Beispiel 10
Ein Färbegefäss eines Labor-Zirkulations-Färbeapparates wird mit
300 ml Wasser von 50°C gefüllt,
20 g Polyester/Seidenmischgewebe 50/50 werden eingebracht und die Flotte fortwährend umgewälzt. Nach 5 min werden
0,1 g eines nichtionischen Netzmittels
0,3 g Na-Acetat zugegeben und die Flotte mit ca. 0,3 ml Essigsäure 80% auf pH 5 gestellt. Dann werden
0,1 g Farbstoff der Formel

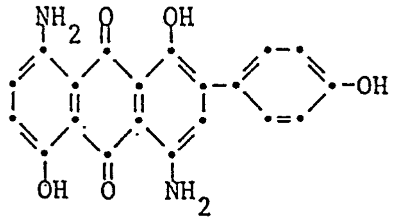

0,1 g Farbstoff der Formel

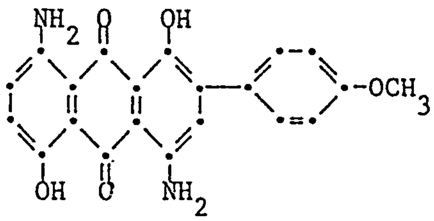

0,01 g Farbstoff der Formel

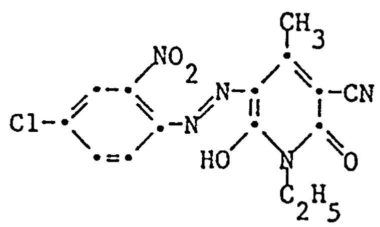

0,2 g Farbstoff der Formel

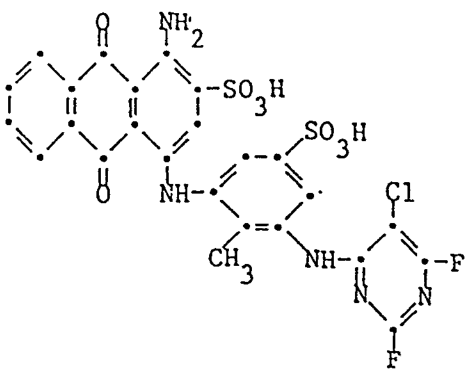

vorgelöst in
20 ml heissem Wasser zugesetzt. Nach 5 min wird das Bad mit einer Geschwindigkeit von 2°C pro Minute auf 120°C aufgeheizt und 30 min auf 120°C gehalten. Das Bad wird dann auf 80°C abgekühlt und

6 g $Na_2SO_4$ zugesetzt. Nach 10 min werden weitere
6 g $Na_2SO_4$ und nach weiteren 10 min nochmals
6 g $Na_2SO_4$ zugegeben und insgesamt 30 min bei 80°C gefärbt. Der pH-Wert der Flotte beträgt 4,5-6. Es werden nun

0,8 g Soda wasserfrei zugegeben wobei der pH-Wert auf 9-9,5 steigt. Es wird 20 min bei 80°C fixiert, dann abgekühlt und 5 min bei 70°C gespült.

Ein neues Bad wird bereitet aus
300 ml Wasser von 80°C und

0,5 g eines nichtionischen Waschmittels - erhalten durch Anlagerung von 10 Äquivalenten Äthylenoxid an iso-Nonylphenol. Das Färbegut wird 15 min bei 80°C mit der Waschflotte behandelt, abgekühlt und 5 min mit Wasser von 60°C und 5 min mit Wasser von 30°C gespült. Anschliessend wird das Färbegut in einem Bad von
300 ml Wasser und

0,3 ml Ameisensäure 85% während 10 min abgesäuert und dann wie üblich entwässert und getrocknet. Es wird eine brillante Blaufärbung erhalten in welcher der Polyester-Anteil in Nuance und Stärke nahezu gleich wie der Seidenanteil gefärbt ist.

Beispiel 11

Ein Färbegefäss eines Laborfärbeapparates wird mit
500 ml Wasser von 25°C gefüllt,
12,5 g Baumwoll-Seide-Mischgewebe werden eingebracht und fortwährend in der Flotte bewegt. Nach 5 min werden
0,250 g Farbstoff der Formel

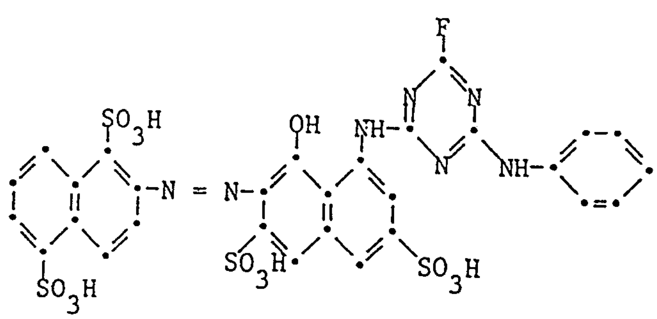

vorgelöst in
20 ml heissem Wasser zugesetzt. Nach 5 min bei 25°C werden
25 g $Na_2SO_4$ zugegeben und das Bad mit einer Geschwindigkeit von 1°C pro Minute auf 60°C aufgeheizt. Es werden nun

1 g Soda wasserfrei zugegeben wobei der pH-Wert auf 9-9,5 steigt. Es wird 30 min bei 60°C fixiert, dann abgekühlt und mehrmals kalt gespült.
Ein neues Bad wird bereitet aus
500 ml Wasser von 80°C und

0,5 g eines nichtionischen Waschmittels – erhalten durch Anlagerung von 10 Äquivalenten Äthylenoxid an iso-Nonylphenol. Das Färbegut wird 15 min bei 80°C mit der Waschflotte behandelt, abgekühlt und mit kaltem Wasser gründlich gespült. Anschliessend wird das Färbegut in einem Bad von
500 ml Wasser und
0,5 ml Ameisensäure 85% während 10 min abgesäuert und dann wie üblich entwässert und getrocknet. Es wird eine brillante blaustichigrote Färbung erhalten, wobei der Seiden- und Baumwollanteil nuancengleich und gleichstark gefärbt sind.

Beispiel 12
Druck auf Seidengewebe
Herstellung der Druckpaste:
30 g Farbstoff der Formel

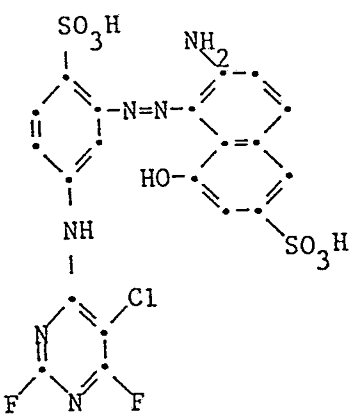

werden mit 50 g Harnstoff, 20 g Thiodiäthylenglykol und 100 ml kaltem Wasser homogen verrührt. Unter Rühren setzt man 300 ml siedendes Wasser zu. In die entstehende homogene Lösung werden 400 g 10%ige Natriumalginat-Lösung und 20 g $Na_2CO_3$ eingerührt und mit Wasser auf 1000 g gestellt.

Die gut fliessende Druckpaste wird über eine Film-, Rotations- oder Walzendruckeinrichtung auf Seidengewebe aufgebracht. Der Druckpastenauftrag pro bedeckte Fläche beträgt ca. 50%. Das bedruckte Gewebe wird im Heissluftttrockner getrocknet und anschliessend in einem Sterndämpfer während 30 min bei 0,2 bar Überdruck gedämpft. Das Gewebe wird zunächst kalt, dann heiss gespült und anschliessend in einem Bad von 60°C enthaltend
2 g/l eines nichtionischen Waschmittels – erhalten durch Anlagerung von 10 Äquivalenten Äthylenoxid an iso-Nonylphenol- und 2 ml/l 20%igen Ammoniak, 15 min mit der Waschflotte behandelt, und mit heissem Wasser gründlich gespült. Anschliessend wird das Gewebe in einem Bad enthaltend
1 ml/l Essigsäure 80% während 10 min abgesäuert und dann wie üblich entwässert und getrocknet. Es wird ein brillanter blaustichigroter Druck erhalten.

Beispiel 13
Ein Färbegefäss eines Laborfärbeapparates wird mit
580 ml Wasser von 40°C gefüllt,
20 g Seidengarn (bombix mori entbastet) werden eingebracht und die Flotte zirkulieren lassen. Nach 5 min werden
0,1 g Farbstoff der Formel

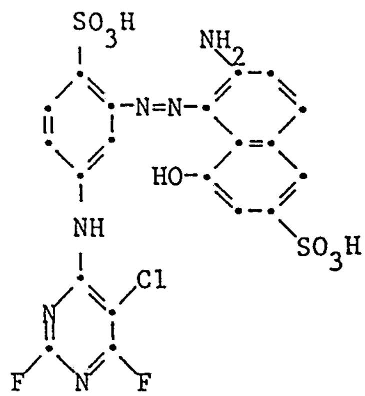

vorgelöst in
20 ml heissem Wasser zugesetzt. Nach 5 min bei 40°C werden
12 g Glaubersalz kalz. zugegeben und das Bad mit einer Geschwindigkeit von 2,5°C pro Minute auf 120°C aufgeheizt und 10 min auf 120°C gehalten. Das Bad wird dann auf 80°C abgekühlt und
0,6 g/l Soda wasserfrei zugegeben wobei der pH-Wert auf 8,0–8,5 steigt. Es wird 10 min bei 80°C fixiert, dann abgekühlt und 10 min bei 40°C gespült. Anschliessend wird das Seidengarn in einem Bad von
600 ml Wasser von 30°C
0,6 ml Essigsäure 80% während 10 min abgesäuert und dann wie üblich entwässert und getrocknet. Es wird eine brillante Rotfärbung erhalten.

**Patentansprüche**

1. Verfahren zum Färben oder Bedrucken von Seide oder seidenhaltigen gemischten Fasermaterialien mit Reaktivfarbstoffen, dadurch gekennzeichnet, dass man Reaktivfarbstoffe der Formel

$$D-[Y]_n \quad (1),$$

worin D der Rest eines sulfogruppenhaltigen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe ist, und $[Y]_n$ für n = 1 bis 4 gleiche oder verschiedene Reaktivreste Y steht, wobei Y 2,4-Difluor-5-chlor-pyrimidinyl oder 4-Fluor-s-triazin-6-yl, welches in 2-Stellung substituiert ist durch Aryl, Alkyl, eine über ein Schwefelatom gebundene aliphatische oder aromatische Mercaptoverbindung, eine über ein

Sauerstoffatom gebundene aliphatische oder aromatische Hydroxylverbindung, $-NH_2$ oder eine über das Stickstoffatom gebundene aliphatische, heterocyclische oder aromatische Aminoverbindung, bedeutet, in wässrigem Medium bei einer Färbetemperatur von 50 bis 130°C einsetzt, und bei einem pH von 8 bis 11 fixiert.

2. Verfahren gemäss Anspruch 1, dadurch gekennzeichnet, dass man Reaktivfarbstoffe der Formel (1), worin D der Rest eines Mono- oder Disazofarbstoffes ist, verwendet.

3. Verfahren gemäss Anspruch 1, dadurch gekennzeichnet, dass man Reaktivfarbstoffe der Formel (1), worin D der Rest eines Schwermetall-Azofarbstoff-Komplexes ist, verwendet.

4. Verfahren gemäss Anspruch 1, dadurch gekennzeichnet, dass man Reaktivfarbstoffe der Formel (1), worin D der Rest eines Anthrachinonfarbstoffes ist, verwendet.

5. Verfahren gemäss Anspruch 1, dadurch gekennzeichnet, dass man Reaktivfarbstoffe der Formel (1), worin D der Rest eines Kupfer- oder Nickelphthalocyanins, Kupfer-Formazan-Komplexes oder Triphendioxazins ist, verwendet.

6. Verfahren gemäss Anspruch 3, dadurch gekennzeichnet, dass man Reaktivfarbstoffe der Formel (1), worin D der Rest eines 1:2-Chrom- oder 1:2-Kobaltkomplexazofarbstoffes der Benzol- oder Naphthalinreihe ist, und das Chrom- bzw. Kobaltatom an jeweils eine metallisierbare Gruppe in ortho-Position zur Azobindung gebunden ist, verwendet.

7. Verfahren gemäss Anspruch 2, dadurch gekennzeichnet, dass man Reaktivfarbstoffe der Formel

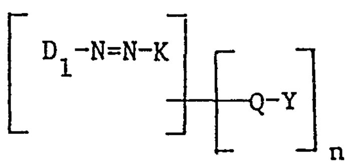

(2)

verwendet, worin $D_1$ der Rest einer Diazokomponente der Benzol- oder Naphthalinreihe, K der Rest einer Kupplungskomponente der Benzol- oder Naphthalinreihe oder der heterocyclischen Reihe, Q ein Brückenglied -N(R)-, und R Wasserstoff oder gegebenenfalls substituiertes $C_{1-4}$-Alkyl ist, Y die für Anspruch 2 geltende Bedeutung hat, und der Reaktivrest Y über Q an die Diazokomponente oder an die Kupplungskomponente gebunden ist, oder je ein oder zwei Reaktivrest(e) sowohl an die Diazokomponente als auch an die Kupplungskomponente gebunden ist (sind), oder zwei Reaktivreste an die Kupplungskomponente oder an die Diazokomponente oder zwei Reaktivreste an die Diazokomponente oder an die Kupplungskomponente und ein Reaktivrest an die Kupplungskomponente oder an die Diazokomponente gebunden sind, und n = 1, 2, 3 oder 4 ist.

8. Verfahren gemäss Anspruch 7, dadurch gekennzeichnet, dass man Reaktivfarbstoffe der Formel (2), worin R Wasserstoff oder Methyl ist, verwendet.

9. Verfahren gemäss Anspruch 1, dadurch gekennzeichnet, dass man Reaktivfarbstoffe der Formel (1) bzw. (2) verwendet, worin Y 2,4-Difluor-5-chlorpyrimidyl-(6) oder ein Amino-fluortriazinylrest ist.

10. Verfahren gemäss einem der Ansprüche 1 bis 9, dadurch gekennzeichnet, dass man bei einer Temperatur zwischen 60 und 90°C färbt.

11. Verfahren gemäss einem der Ansprüche 1 bis 9, dadurch gekennzeichnet, dass man Seide (bombyx mori) mit Amino-fluor-s-triazin-farbstoffen bei einer Temperatur zwischen 50 und 60°C, und mit 2,4-Difluor-5-chlorpyrimidin-Reaktivfarbstoffen bei einer Temperatur zwischen 60 und 80°C färbt.

12. Verfahren gemäss einem der Ansprüche 1 bis 9, dadurch gekennzeichnet, dass man Tussahseide mit Amino-fluor-s-triazinfarbstoffen bei einer Temperatur zwischen 60 und 75°C, und mit 2,4-Difluor-5-chlorpyrimidin-Reaktivfarbstoffen bei einer Temperatur zwischen 70 und 100°C färbt.

13. Verfahren gemäss einem der Ansprüche 1 bis 12, dadurch gekennzeichnet, dass man bei einem pH von 8,5 bis 9,5 fixiert.

14. Verfahren gemäss einem der Ansprüche 1 bis 13, dadurch gekennzeichnet, dass man das Fixieralkali gegen Ende des Färbeprozesses einsetzt.

15. Verfahren gemäss einem der Ansprüche 1 bis 5, dadurch gekennzeichnet, dass man die gefärbte Ware in einer wässrigen Waschflotte bei einem pH von 8,5 bis 9 und erhöhter Temperatur, gegebenenfalls in Gegenwart eines nichtionischen Waschmittels auswäscht.

16. Verfahren gemäss Anspruch 1, dadurch gekennzeichnet, dass man seidenhaltige gemischte Fasermaterialien mit Farbstoffmischungen färbt oder bedruckt, wobei eine Mischungskomponente ein Farbstoff der Formel (1) ist und die übrigen Mischungskomponenten nichtfaserreaktive Farbstoffe sind.

17. Verfahren gemäss den Ansprüchen 1 und 10 bis 15, dadurch gekennzeichnet, dass man nach der Ausziehmethode färbt.

## Claims

1. A process for dyeing or printing silk or silk-containing fibre blends with reactive dyes, which comprises the use of reactive dyes of the formula

$$D-[Y]_n \quad (1),$$

wherein D is the radical of a sulfo-group-containing dye of the mono- or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, $[Y]_n$, where n is 1 to 4, is identical or different reactive radicals Y, where Y is 2,4-difluoro-5-chloropyrimidinyl or 4-fluoro-s-triazin-6-yl, which is substituted in the 2-position by aryl, alkyl, an aliphatic or aromatic mercapto compound which is attached via a sulfur atom, an aliphatic or aromatic hydroxyl compound which is attached via an oxygen atom, $-NH_2$ or an aliphatic, heterocyclic or aromatic amino compound which is attached via the nitrogen atom, in aqueous medium at a dyeing temperature of 50 to 130°C, and effecting dye fixation at a pH of 8 to 11.

2. A process according to claim 1, which comprises the use of reactive dyes of the formula (1), wherein D is the radical of a monoazo or disazo dye.

3. A process according to claim 1, which comprises the use of reactive dyes of the formula (1), wherein D is the radical of a heavy metal azo dye complex.

4. A process according to claim 1, which comprises the use of reactive dyes of the formula (1), wherein D is the radical of an anthraquinone dye.

5. A process according to claim 1, which comprises the use of reactive dyes of the formula (1), wherein D is the radical of a copper or nickel phthalocyanine, of a copper formazan complex or of a triphendioxazine.

6. A process according to claim 3, which comprises the use of reactive dyes of the formula (1), wherein D is the radical of a 1:2 chromium or 1:2 cobalt complex azo dye of the benzene or naphthalene series, the chromium or cobalt atom being attached in each case to a metallizable group in the ortho-position to the azo bond.

7. A process according to claim 2, which comprises the use of reactive dyes of the formula

$$\left[ D_1-N=N-K \right] \left[ -Q-Y \right]_n \qquad (2)$$

wherein $D_1$ is the radical of a diazo component of the benzene or naphthalene series, K is the radical of a coupling component of the benzene, naphthalene or heterocyclic series, Q is a bridge member -N(R)-, and R is hydrogen or unsubstituted or substituted $C_1$–$C_4$-alkyl, Y is as defined in claim 2 (sic), and the reactive radical Y is attached through Q to the diazo component or to the coupling component, or both the diazo component and the coupling component each carry one or two reactive radicals, or two reactive radicals are attached to the coupling component or to the diazo component, or two reactive radicals are attached to the diazo component or to the coupling component and one reactive radical is attached to the coupling component or to the diazo component, and n is 1, 2, 3 or 4.

8. A process according to claim 7, which comprises the use of reactive dyes of the formula (2), wherein R is hydrogen or methyl.

9. A process according to claim 1, which comprises the use of reactive dyes of the formula (1) or (2), wherein Y is 2,4-difluoro-5-chloropyrimid-6-yl or an aminofluorotriazinyl radical.

10. A process according to any one of claims 1 to 9, wherein dyeing is carried out at a temperatur between 60 and 90°C.

11. A process according to any one of claims 1 to 9, which comprises dyeing silk (bombyx mori) with aminofluoro-s-triazine dyes at a temperature between 50 and 60°C, and with 2,4-difluoro-5-chloropyrimidine reactive dyes at a temperature between 60 and 80°C,

12. A process according to any one of claims 1 to 9, which comprises dyeing tussah silk with aminofluoro-s-triazine dyes at a temperature between 60 and 75°C, and with 2,4-difluoro-5-chloropyrimidine reactive dyes at a temperature between 70 and 100°C.

13. A process according to any one of claims 1 to 12, wherein dye fixation is carried out at a pH of 8.5 to 9.5.

14. A process according to any one of claims 1 to 13, wherein the fixation alkali is used towards the end of the dyeing process.

15. A process according to any one of claims 1 to 5, wherein the dyed goods are given a washing off in an aqueous wash liquor at a pH of 8.5 to 9 and at elevated temperature, optionally in the presence of a non-ionic detergent.

16. A process according to claim 1 which comprises dyeing or printing silk-containing fibre blends with dye mixtures, one component of which is a dye of the formula (1) and the other components of which are dyes which are not fibre-reactive.

17. A process according to any one of claims 1 or 10 to 15, wherein dyeing is carried out by the exhaust method.

**Revendications**

1. Procédé pour la teinture ou l'impression de la soie ou de matières textiles mélangées contenant de la soie avec des colorants réactifs, caractérisé par le fait que l'on utilise des colorants réactifs de formule:

$$D-[Y]_n \qquad (1),$$

dans laquelle D représente le reste d'un colorant contenant des groupes sulfo, de la série mono- ou polyazoïque, azoïque à complexe métallique, anthraquinone, phtalocyanine, formazan, azométhine, dioxazine, phénazine, stilbène, triphénylméthane, xanthène, thioxanthone, nitroaryle, naphtoquinone, pyrénequinone ou pérylènetétracarbimide, et $[Y]_n$ représente, pour n = 1 à 4, des restes réactifs Y identiques ou différents, Y représentant le reste 2,4-difluoro-5-chloropyrimidinyle ou le reste 4-fluoro-s-triazine-6-yle, qui est substitué en position 2 par un reste aryle, un reste alkyle, un composé mercapto aliphatique ou aromatique lié par un atome de soufre, un composé hydroxylé aliphatique ou aromatique lié par un atome d'oxygène, $-NH_2$ ou un composé aminé aliphatique, hétérocyclique ou aromatique lié par

un atome d'azote, en milieu aqueux à une température de teinture de 50 à 130°C, et qu'on les fixe à un pH compris entre 8 et 11.

2. Procédé selon la revendication 1, caractérisé par le fait que l'on utilise les colorants réactifs de formule (1), dans laquelle D est le reste d'un colorant mono- ou bisazoïque.

3. Procédé selon la revendication 1, caractérisé par le fait que l'on utilise les colorants réactifs de formule (1), dans laquelle D est le reste d'un complexe (métal lourd-colorant azoïque).

4. Procédé selon la revendication 1, caractérisé par le fait que l'on utilise des colorants réactifs de formule (1) dans laquelle D est le reste d'un colorant anthraquinone.

5.Procédé selon la revendication 1, caractérisé par le fait que l'on utilise des colorants réactifs de formule (1) dans laquelle D est le reste d'une phtalocyanine de cuivre ou de nickel, d'un complexe cuivre-formazan ou d'une triphényldioxazine.

6. Procédé selon la revendication 3, caractérisé par le fait que l'on utilise des colorants réactifs de formule (1) dans laquelle D est le reste d'un colorant azoïque à complexe de chrome-1:2 ou de cobalt-1:2 de la série benzènique ou naphtalènique, et dans laquelle l'atome de chrome ou de cobalt est lié à chaque fois à un groupe métallable se trouvant en position ortho par rapport à la liaison azoïque.

7. Procédé selon la revendication 2, caractérisé par le fait que l'on utilise des colorants réactifs de formule

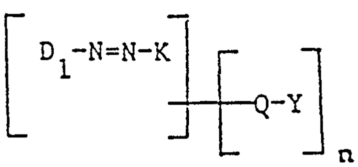

(2)

dans laquelle $D_1$ est le reste d'un constituant diazo de la série benzènique ou naphtalènique, K est le reste d'un constituant de copulation de la série benzènique ou naphtalènique ou de la série hétérocyclique, Q est un chaînon pontant -N(R)-, et R est un hydrogène ou un reste alkyle en $C_{1-4}$ éventuellement substitué, Y a la signification valable pour la revendication 2, et le reste réactif Y est lié par Q au constituant diazo ou au constituant de copulation, ou bien un ou deux reste(s) réactif(s) est (ou sont) lié(s) tant au constituant diazo qu'au constituant de copulation, ou bien deux restes réactifs sont liés au constituant de copulation ou au constituant diazo, ou bien deux restes réactifs sont liés au constituant diazo ou au constituant de copulation et un reste réactif est lié au constituant de copulation ou au constituant diazo, et n = 1, 2, 3 ou 4.

8. Procédé selon la revendication 7, caractérisé par le fait que l'on utilise des colorants réactifs de formule (2), dans laquelle R est un hydrogène ou le reste méthyle.

9. Procédé selon la revendication 1, caractérisé par le fait que l'on utilise des colorants réactifs de formule (1) ou (2), dans lesquelles Y est le reste 2,4-difluoro-5-chloropyrimidinyle-(6) ou un reste amino-fluorotriazinyle.

10. Procédé selon une des revendications 1 à 9, caractérisé par le fait que l'on effectue la teinture à une température comprise entre 60 et 90°C.

11. Procédé selon une des revendications 1 à 9, caractérisé par le fait que l'on teinte de la soie (bombyx mori) avec des colorants d'amino-fluoro-s-triazine à une température comprise entre 50 et 60°C, et avec des colorants réactifs de 2,5-difluoro-5-chloropyrimidine à une température comprise entre 60 et 80°C.

12. Procédé selon une des revendications 1 à 9, caractérisé par le fait que l'on teinte de la soie Tussah avec des colorants d'amino-fluoro-s-triazine à une température comprise entre 60 et 75°C, et avec des colorants réactifs de 2,4-difluoro-5-chloropyrimidine à une température comprise entre 70 et 100°C.

13. Procédé selon une des revendications 1 à 12, caractérisé par le fait que l'on effectue le fixage à un pH compris entre 8,5 et 9,5.

14. Procédé selon une des revendications 1 à 13, caractérisé par le fait que l'on introduit l'alcali de fixage vers la fin du procédé de teinture.

15. Procédé selon une des revendications 1 à 5, caractérisé par le fait qu'on lave à fond la matière teintée dans un bain de lavage aqueux à un pH de 8,5 à 9 et à température élevée, éventuellement en présence d'un agent de lavage non ionique.

16.Procédé selon la revendication 1, caractérisé par le fait qu'on effectue la teinture ou l'impression de matières textiles mélangées contenant de la soie avec des mélanges de colorants, un composant du mélange étant un colorant de formule (1) et les autres composants du mélange étant des colorants ne réagissant sur les fibres.

17. Procédé selon les revendications 1 et 10 à 15, caractérisé par le fait qu'on effectue la teinture selon le procédé par épuisement.